Europäisches Patentamt

**European Patent Office**

**Office européen des brevets**

(19)

(11) Veröffentlichungsnummer: **0 062 337 B1**

(12) **EUROPÄISCHE PATENTSCHRIFT**

(45) Veröffentlichungstag der Patentschrift:
**08.10.86**

(51) Int. Cl.⁴: **C 22 B 1/00,** B 22 F 3/14,
B 22 F 3/20

(21) Anmeldenummer: **82102853.7**

(22) Anmeldetag: **03.04.82**

(54) **Verfahren zur Rückgewinnung von insbesondere hochwertigen Werkstoffen.**

(30) Priorität: **04.04.81 DE 3113733**

(43) Veröffentlichungstag der Anmeldung:
**13.10.82 Patentblatt 82/41**

(45) Bekanntmachung des Hinweises auf die Patenterteilung:
**08.10.86 Patentblatt 86/41**

(84) Benannte Vertragsstaaten:
**FR GB IT SE**

(56) Entgegenhaltungen:
**DE - A - 1 929 986**
**DE - B - 2 043 703**
**FR - A - 2 012 565**
**FR - A - 2 304 678**

**Die Akte enthält technische Angaben, die nach dem Eingang der Anmeldung eingereicht wurden und die nicht in dieser Patentschrift enthalten sind.**

(73) Patentinhaber: **Kamax-Werke Rudolf Kellermann GmbH & Co. KG, Petershütter Allee 29, D-3360 Osterode am Harz (DE)**

(72) Erfinder: **Mordike, Barry Leslie, Prof. Dr. Phil., Hüttenweg 1b, D-3392 Clausthal-Zellerfeld (DE)**
Erfinder: **Bergmann, Hans Wilhelm, Dr., Bruchbergweg 20, D-3392 Clausthal-Zellerfeld (DE)**
Erfinder: **Turlach, Gerhard, Am Butterbergweg 24, D-3360 Osterode (DE)**

(74) Vertreter: **Patentanwälte Dipl.-Ing. Rudolf Bibrach Dipl.-Ing. Elmar Rehberg, Pütterweg 6 Postfach 738, D-3400 Göttingen (DE)**

**Beschreibung**

Die Erfindung betrifft ein Verfahren zur Rückgewinnung von hochwertigen Werkstoffen, die als Späne und/oder Kernschrott bei einer industriemässigen Fertigung von Teilen aus Schnellarbeitsstahl, Nickel- oder Eisen-Wolfram-Legierungen anfallen.

Ein solches Verfahren, bei dem die Späne und/oder der Kernschrott in Abhängigkeit von deren Zusammensetzung und Lieferform zerkleinert, vermischt, entfettet, gebeizt, ggf. entgast und zu einem Rohling mit einer Dichte von mindestens 80% der theoretischen Dichte vorkompaktiert werden, ist bereits in der DE-A-1 929 986 sowie den DE-B-2 043 703 und 1 752 757 (entsprechend zu FR-A-2 012 565) bzw. der DE-A-2 611 337 (entsprechend zu FR-A-2 304 678) beschrieben. Den sich dabei ergebenden Grünling unmittelbar oder nach Einschweissen in einen Schutzbehälter bis auf eine oberhalb der Rekristallisationstemperatur des Materials liegende Temperatur aufzuheizen und auf eine Enddichte von etwa 98% warm umzuformen, zeigen die US-A-2 123 416 und 2 358 667. Die DE-A-2 849 121 beschreibt das Aufheizen unter Vakuum.

Alle solche Verfahren sind arbeits- und energieaufwendig und haben vor allem den Mangel, dass beim Schmelzen erhebliche Verluste in Kauf genommen werden müssen und nicht alle hochwertigen Bestandteile wieder zurückgewonnen werden.

Aufgabe der Erfindung ist es, aus industriemässig anfallenden Spänen und/oder Kernschrotten ohne Oxydations- bzw. Verdampfungsverluste vollwertiges Halbzeug herzustellen, um auf diese Weise teure Werkstoffe nahezu 100%ig wieder zurückzugewinnen. Dabei soll eine kostengünstigere Aufbereitung sichergestellt werden, als dies mit den üblichen schmelzmetallurgischen Verfahren möglich ist.

Dies wird erfindungsgemäss dadurch erreicht, dass den Spänen und/oder dem Kernschrott vor der Vorkompaktierung als desoxydierende Zusätze Aluminium, Magnesium, Zirkonium oder Titan in fester Form sowie presserleichternde Hilfsmittel zugegeben werden.

Vorzugsweise erfolgt die Aufheizung des vorkompaktierten Materials unter Vakuum zwecks Verhinderung einer Gasaufnahme.

Somit ist der Gegenstand der Erfindung ein Verfahren zur Rückgewinnung von hochwertigen Werkstoffen gemäss Anspruch 1. Spezielle Ausführungsformen der Erfindung sind den Gegenständen der abhängigen Ansprüche zu entnehmen.

Dem Span- und Kernschrottmaterial, das vor Bildung des Rohlings vorbehandelt, z.B. entfettet, gebeizt, zerkleinert und ggf. entgast wird, werden ausser den desoxydierenden Zusätzen auch presserleichternde Zusätze, wie z.B. Mikro-Wachse, hinzugefügt.

Die Warmumformung der Rohlinge erfolgt z.B. durch Strangpressen, bis eine dem Verwendungszweck entsprechende Enddichte erreicht ist. Die Umformung der Rohlinge kann durch mehrfache Verformung erfolgen, bis eine Enddichte von mindestens 95% erreicht ist.

Die aus dem aufbereiteten Schrott durch Vorkompaktieren hergestellten Grünlinge werden vorzugsweise unter Vakuum aufgeheizt und zu Stangen von gewünschten Abmessungen strangepresst und schliesslich als Halbzeug weiterverarbeitet. Die Erfindung ermöglicht es aber weiterhin, die auf diese Weise hergestellten Halbfabrikate umzuschmelzen bzw. im Vakuum umzutropfen und in anderer Weise weiterzuverarbeiten.

Es ist darauf zu achten, dass eine möglichst hohe Gründichte erreicht wird, weil sich die in dem Material eingeschlossenen Hohlräume negativ auf das Bindungsverhalten und die erreichbare Enddichte auswirken. Entsprechend den zur Aufbereitung kommenden Materialien und deren Form sind die Aufheizbedingungen, wie Aufheizzeit, erreichte Endtemperatur, benötigte Atmosphäre usw. festzulegen, ebenso wie die jeweils erforderlichen Presskräfte und die erzielbaren Umformgrade und Umformgeschwindigkeiten beim Strangpressen.

Ein besonders günstiges Ausführungsbeispiel für die Rückgewinnung hochwertiger Werkstoffe ist folgendes:

Industriell anfallender Späne- und Kernschrott wird je nach Zusammensetzung und Lieferform vorbehandelt, beispielsweise durch Zerkleinern, Entfetten, Beizen und Entgasen. Beide Schrottarten oder Mischungen werden nach Zugabe von Al, Mg, Zr oder Ti als desoxydierende Zusätze sowie von presserleichternden Hilfsmitteln, z.B. Mikro-Wachsen, zu Grünlingen mit möglichst hoher Gründichte (mindestens 80% theoretischer Dichte) vorkompaktiert. Je nach dem zu verarbeitenden Schrott wird der Rohling direkt oder nach Einschweissen in einen Schutzbehälter unter Vakuum aufgeheizt und bei einer Temperatur oberhalb der Rekristallisationstemperatur der Legierung, deren Höhe von den jeweiligen Werkstoffen abhängt, umgeformt, wobei der Verformungsgrad mindestens 50% der bezogenen Querschnittsänderung beträgt.

Durch eine oder mehrere solcher Umformungen, z.B. durch Strangpressen, wird eine Enddichte von mindestens 98% erreicht. Durch die hohe Umformung in einem Umformschritt kommt es zu einer atomaren Bindung der stückigen Bestandteile. Die desoxydierenden Zusätze verhindern eine Oxydation des Metalls während des Herstellungsprozesses und verhindern auch das Lösen von Sauerstoff im Metall. Hierdurch können eine Versprödung vermieden und auch die Umformkräfte abgesetzt werden.

**Patentansprüche**

1. Verfahren zur Rückgewinnung von hochwertigen Werkstoffen, die als Späne und/oder Kernschrott bei einer industriemässigen Fertigung von Teilen aus Schnellarbeitsstahl, Nickel- oder Eisen-Wolfram-Legierungen anfallen und bei dem die Späne und/oder der Kernschrott in Abhängigkeit von deren Zusammensetzung und Lieferform zerkleinert, vermischt, entfettet, gebeizt, ggf. entgast und zu einem Rohling mit einer Dichte von mindestens 80% der theoretischen Dichte vorkompaktiert werden und der sich dabei ergebende Grünling unmittelbar oder nach Einschweissen in einen Schutzbehälter bis auf eine oberhalb der Rekristallisationstemperatur des Materials liegende Temperatur aufgeheizt und auf eine Enddichte von mindestens 95% warm umgeformt wird, wobei den Spänen und/oder dem Kernschrott vor der Vorkompaktierung als desoxydierende Zusätze Aluminium, Magnesium, Zirkonium oder Titan in fester Form sowie presserleichternde Hilfsmittel zugegeben werden.

2. Verfahren nach Anspruch 1, dadurch gekennzeichnet, dass zwecks Verhinderung einer Gasaufnahme des vorkompaktierten Materials dessen Aufheizung unter Vakuum erfolgt.

3. Verfahren nach Anspruch 1, dadurch gekennzeichnet, dass als presserleichternde Zusätze Mikro-Wachse hinzugefügt werden.

4. Verfahren nach Anspruch 1 bis 3, dadurch gekennzeichnet, dass die Warmumformung der Rohlinge durch ein- oder mehrmaliges Strangpressen und ggf. weitere Verformungen erfolgt, bis eine dem Verwendungszweck entsprechende Enddichte von mindestens 95% erreicht ist.

5. Verfahren nach Anspruch 1 bis 4, dadurch gekennzeichnet, dass das Material nach seiner Verformung umgeschmolzen oder umgetropft wird.

## Claims

1. Process for the recovery of high-value materials which accrue as swarf and/or solid scrap in an industrial production of parts from high-speed steel, nickel and iron/tungsten alloys, the swarf and/or the solid scrap, depending on their composition and delivery form, being comminuted, mixed, degreased, pickled, optionally degassed and precompacted to form a slug having a density of at least 80% of the theoretical density and the green compact produced in this process being heated immediately or after welding into a protective container up to a temperature above the recrystallisation temperature of the material and being hot-formed to obtain a final density of at least 95%, wherein aluminium, magnesium, zirconium or titanium are added in solid form as deoxidizing additives as well as auxiliaries which facilitate pressing.

2. Process according to Claim 1, characterized in that, in order to prevent gas absorption by the precompacted material, it is heated up under vacuum.

3. Process according to Claim 1, characterized in that micro-crystalline waxes are added as additives which facilitate pressing.

4. Process according to Claims 1 to 3, characterized in that the hot-forming of the slugs takes place by one or more extrusions steps and further deformations optionally take place until a final density of at least 95% appropriate to the application is achieved.

5. Process according to Claims 1 to 4, characterized in that the material, after it has been deformed, is remelted or reconverted into drops.

## Revendications

1. Procédé de récupération de matériaux de haute valeur, qui se présentent sous forme de copeaux et/ou de particules dans une fabrication industrielle de pièces en acier rapide, en alliages de tungstène-nickel-fer ou de tungstène-fer et dans lequel les copeaux et/ou les particules sont, en fonction de leur composition et de la forme de leur livraison, broyés, mélangés, dégraissés, décapés, le cas échéant dégazés, et précompactés en une ébauche ayant une densité d'au moins 80% de la densité théorique, cependant que l'ébauche de compact qui en résulte est échauffée directement ou après soudage dans un récipient protecteur, jusqu'à une température supérieure à la température de recristallisation de la matière, et formée à chaud jusqu'à une densité finale d'au moins 95%, cependant qu'on ajoute aux copeaux et/ou aux particules, avant le précompactage, des additifs désoxydants, constitués par de l'aluminium, du magnésium, du zirconium ou du titane sous forme solide, ainsi que des adjuvants de comptactage.

2. Procédé suivant la revendication 1, caractérisé en ce que l'échauffement de la matière précompactée se fait sous vide, pour que du gaz ne soit pas absorbé.

3. Procédé suivant la revendication 1, caractérisé en ce que les additifs de compactage sont des micro-cires.

4. Procédé suivant les revendications 1 à 3, caractérisé en ce que le formage à chaud des ébauches est exécuté sous forme d'extrusion unique ou répétée et, le cas échéant, d'autres déformations, jusqu'à ce qu'une densité finale d'au moins 95%, correspondant aux besoins, soit atteinte.

5. Procédé suivant les revendications 1 à 4, caractérisé en ce que la matière peut, après son formage, être refondue ou de nouveau égouttée.